# EUROPEAN PATENT SPECIFICATION

(11) **EP 0 810 383 B1**
(45) Date of publication and mention of the grant of the patent: **19.03.2003**
(21) Application number: 96303830.2
(22) Date of filing: 29.05.1996
(51) Int. Cl.: F16D 13/72

(54) **A friction plate**
Reibscheibe
Disque de friction

(43) Date of publication of application: 03.12.1997
(73) Proprietor: DYNAX CORPORATION, Chitose-shi, Hokkaido (JP)
(72) Inventor: Takakura, Norio, c/o Dynax Corp., Chitose-shi, Hokkaido (JP); Zhi-Peng, Han, c/o Dynax Corp., Chitose-shi, Hokkaido (JP)
(74) Representative: Meddle, Alan Leonard

(56) References cited:
- DE-A- 1 908 848
- DE-A- 2 551 270
- US-A- 3 094 194
- US-A- 3 198 295
- US-A- 3 249 189
- US-A- 5 176 236
- PATENT ABSTRACTS OF JAPAN vol. 010, no. 171 (M-489), 17 June 1986 & JP 61 021425 A (TOYOTA JIDOSHA KK), 30 January 1986,

## Description

### Background of the Invention

### Field of the Invention

The present invention relates to a friction plate of a friction engagement device to be used in an automatic transmission or other device in which mating plates and the friction plates are alternately arranged. More particularly, the present invention relates to a friction plate best suited for use in a friction engagement device in which the mating plate is constantly rotating.

### Discussion of the Prior Art

A friction engagement device for use in an automatic transmission has-friction plates and mating plates which are alternately arranged. When a piston is actuated with a hydraulic pressure, the friction plate and the mating plate are engaged to transmit a torque. The friction engagement device is usually used in oil and therefore oil is held in the automatic transmission housing.

The oil to be used in the friction engagement device is for cooling the friction plates and the mating plates and for lubricating peripheral equipment. A groove for oil recirculation is usually formed in the friction plates. Cooling and lubrication effects depend largely upon the shape of this groove.

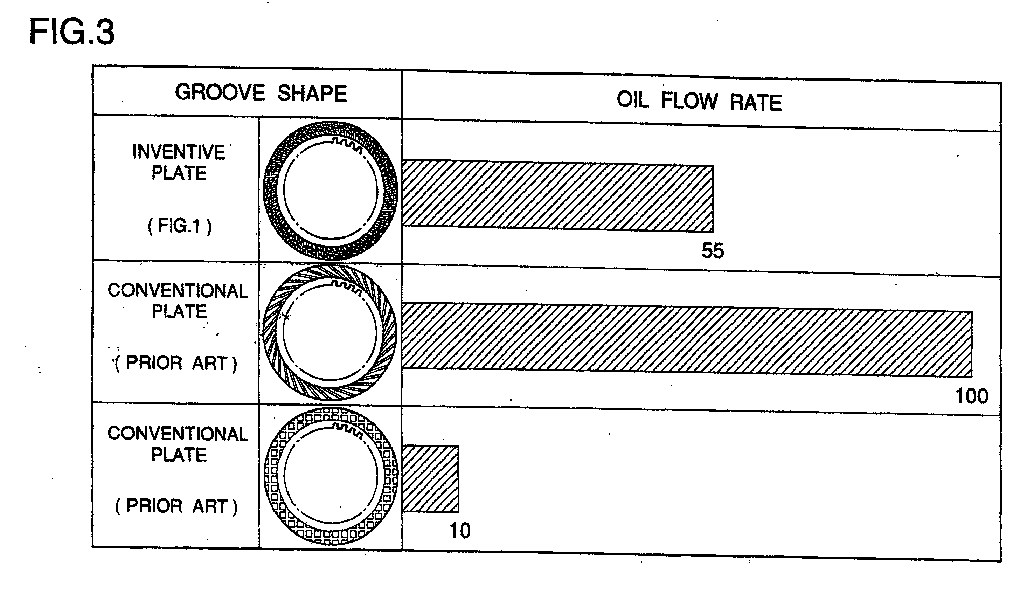

To improve the friction plate and mating plate cooling effect, a groove preferably divides the friction material on the friction plate surface into small segments. For example, a grid-like groove may be used for this purpose, as shown in Fig. 3, third row. On the other hand, to improve the effect of lubricating the peripheral equipment, it is preferable to adopt a groove of such a shape that allows the flow of more oil on the friction plate surface. In this case, radial grooves are often adopted, as shown in Fig. 3, second row.

However, dividing the friction material into small segments for the purpose of improving the cooling effect restricts the oil flow, resulting in insufficient lubrication of the peripheral equipment. On the other hand, if radial grooves are provided in the surface of the friction material for the purpose of improving the lubrication effect of the peripheral equipment, oil passage will be accelerated, deteriorating the cooling effect of the friction plate and the mating plate. Thus, respecting friction plates, the acceleration of oil passage and the acceleration of cooling are generally incompatible with each other.

US-A-5176236 discloses a friction plate having a friction material provided with a groove pattern which includes inclined radial grooves and connecting grooves extending through a friction material segment between adjacent radial grooves to connect the adjacent radial grooves with each other. In this known arrangement, the connecting grooves in each friction material segment are radially aligned with the connecting grooves in adjacent material segments.

It is an object of the present invention to provide a friction plate having a groove form which can simultaneously satisfy both the cooling of the friction plate and mating plate and the lubrication of peripheral equipment.

### Summary of the Invention

The present invention provides a solution to the above-described needs by the use of a friction plate in accordance with claim 1 which is characterised in that the connecting grooves in each friction material segment are radially staggered from the connecting grooves in the adjacent friction material segments.

The present invention is suitable for use in a friction engagement device of such a type that a mating plate is constantly rotating. As the mating plate is rotating, oil flowing through the friction plate is imparted with a force based on viscosity (a frictional force) from the mating plate. This force is a resultant of a centrifugal force and a tangential force. However, as the friction plate is not rotating, the tangential force is greater than the centrifugal force. The resultant force, therefore, tends to force the oil to flow along the radial groove and then the connecting groove. The oil at the outlet of the connecting groove flows along the next adjacent radial groove, and then flows along the connecting groove of the adjacent segment of the friction material. The oil continues this process until it reaches the outer edge of the plate.

Thus, as the mating plate is rotating, the oil at the inner edge of the friction material flows first along the radial groove. The oil thus flowing along the radial groove is branched off to the connecting groove at a branch point, tending to flow mainly along the connecting groove. This is because the oil is imparted with a great tangential force as stated above. When the oil flowing along the connecting groove has reached a branch point where the connecting groove meets the next radial groove, the oil starts flowing toward the outer edge along the radial groove, until another branch point is reached with a connecting groove. Having reached a branch point with a connecting groove, the oil will then tangentially flow mainly along the connecting groove. The oil thus flowing along the radial and connecting grooves is led out to the outer edge of the friction plate, flowing generally diagonally across the surface of the friction material.

### Brief Description of the Drawings

Fig. 1 is a plan view showing an embodiment of a friction plate according to the present invention;
Fig. 2 is an enlarged plan view showing the flow of oil at the friction plate of Fig. 1; and
Fig. 3 is a comparison graph for comparing the quantity of oil passage between the friction plate of the present invention and conventional friction plates.

### Detailed Description of the Preferred Embodiments

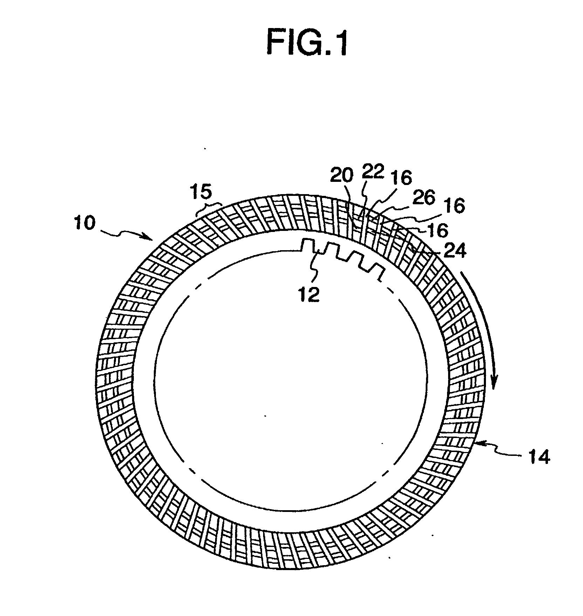

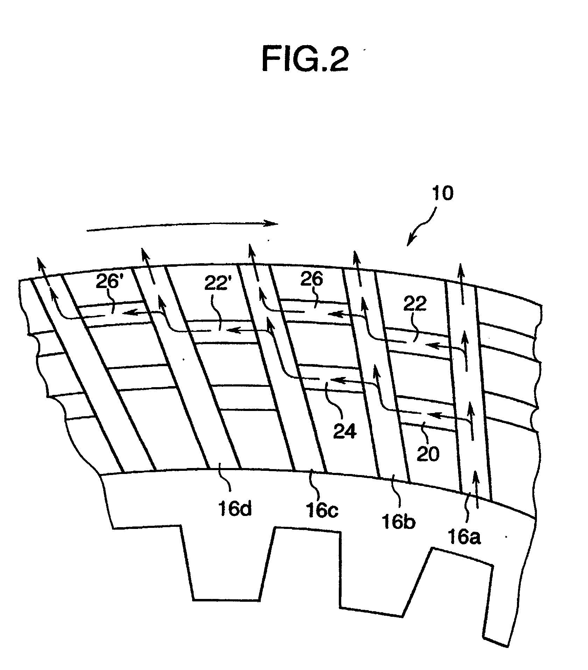

Hereinafter a preferred embodiment of the present invention will be explained with reference to Fig.1 of the accompanying drawings.

A friction plate 10 of Fig. 1 has a core plate 12 and a friction material 14 fastened on both sides of the core plate. A friction engagement device (not shown) incorporating the friction plate 10 consists of a plurality of plates 10, which are alternately arranged with a plurality of mating plates (not shown). On the surface of the friction material 14 are formed radial grooves 16 and connecting grooves 20, 22, 24 and 26. The radial grooves 16 and the connecting grooves 20, 22, 24 and 26 are formed by a press-forming process and sometimes by adhering a segmented friction material on the core plate 12.

The radial grooves 16 thus formed range from the inner edge through to the outer edge of the friction material 14. The friction material 14 is divided into a plurality of friction material segments 15 by the radial grooves 16.

The radial grooves 16 incline in the same direction on both sides of the friction material 10. When the friction plate 10 is fitted, for example, in a hub spline, the radial grooves 16 will be inclined in either the clockwise or counterclockwise direction. The cross-sectional shape of the radial grooves 16 in the friction plate 10 of the present embodiment is semi-circular, but they could be any suitable shape to practice the invention.

The connecting grooves 20, 22, 24 and 26 are formed in their respective friction material segments 15. The connecting grooves 20, 22, 24 and 26 in the present embodiment are tangential grooves connecting adjacent radial grooves 16, 16, and may be circumferential grooves concentric with the friction plate 10.

The connecting grooves 20, 22, 24 and 26 are formed with two in each friction material segment 15. However, the number of the connecting grooves in each friction material segment 15 may be one, or three or more, and furthermore may be different from that of adjacent friction material segments 15.

What is important in the connecting grooves is that the connecting grooves 20 and 22 in one friction material segment 15 are staggered in relation to the connecting grooves 24 and 26 in the adjacent friction material segments 15 in the radial direction on both sides of the radial grooves 16.

The friction plate 10 of the present embodiment is suitable for use in a friction engagement device of such a type that the mating plate which mates with the friction plate 10 is constantly rotating. The friction plate 10 is attached so that the radial grooves 16 will be inclined in the same direction as the direction of rotation of the mating plate. The arrow mark in Fig. 1 indicates the direction of rotation of the mating plate.

As the mating plate rotates, the oil present between the friction plate 10 and the mating plate is imparted with a force, dependent on viscosity (frictional force), by the mating plate. This force is a resultant of a centrifugal force and a tangential force. Since the friction plate 10 is not rotating, the tangential force is greater than the centrifugal force. The oil present in the vicinity of the inner edge of the friction material 14 flows from openings at the inner edge of the radial grooves 16 onto the surface of the friction material 12 along the radial grooves 16. Also, the oil in the radial grooves 16 tends to flow along the inclination toward the outer edge, while the oil in the connecting grooves 20, 22, 24 and 26 tends to flow tangentially.

Fig. 2 shows the route by which the oil that has flowed from the opening of the inner edge of one-radial groove 16 onto the surface of the friction material will reach the outer edge of the friction plate 10. As is clear from the drawing, the oil flowing along the radial groove 16a tends to flow mainly along the connecting groove 20 from a branch point to the connecting groove 20. The oil flows partly in the direction of the outer edge in the radial groove 16a. The oil flowing along the connecting groove 20, that has reached the radial groove 16b, flows along the radial groove 16b as far as a branch point to the connecting groove 24, where the oil tends to flow mainly along the connecting groove 24. A part of the oil flows in the direction of the outer edge in the radial groove 16b. Furthermore, the oil flows in a similar manner between the radial groove 16a and the connecting groove 22, between the radial groove 16b and the connecting groove 26, between the radial groove 16c and the connecting groove 22', and between the radial groove 16d and the connecting groove 26'.

Oil flow along the connecting grooves 20, 22, 24 and 26, as described above, is accelerated by the rotation of the mating plate; and the rotation of the mating plate leads the oil out to the outer edge of the friction plate 10. The oil, flowing obliquely across the friction material 12, is rapidly led out to the outer edge of the friction plate 10 while cooling the surface of the friction material.

Fig. 3 is a graph giving relative oil flow rates at conventional friction plates, one having grid-like grooves and the other having only radial grooves, and the friction plate of the present invention. From Fig. 3, it is clear that the friction plate 10 of Fig. 1 allows the passage of a lower flow rate than the conventional friction plate having the simple inclined grooves, but allows a higher rate of passage of oil than the conventional friction plate having the grid-like pattern.

The friction plate 10 of the present invention, however, has connecting or tangential grooves in the surface of the friction material; therefore, in addition to a comparable rate of oil passage as in the conventional friction plate, the friction plates are effective for improved cooling of the friction materials.

The invention accomplishes this by passing the oil along the radial grooves and the connecting grooves by utilizing the pressure imparted to the oil by rotation of the mating plate in relation to the friction plate. It is, therefore, possible to pass a large quantity of oil from the inner edge toward the outer edge of the friction material and also to effectively cool the surface of the friction material.

## Claims

1. A friction plate (10) comprising a friction material (14) secured on a core plate (12) and formed with grooves (16, 20, 22, 24, 26) in the surface thereof, wherein said grooves include a plurality of radial grooves (16) which are inclined from the inner edge towards the outer edge of said friction material (14) and divide said friction material (10) into friction material segments (15), and connecting grooves (20, 22, 24, 26) extending through each of said friction material segments (15) to connect adjacent radial grooves (16) with each other, said connecting grooves (20, 22) in one friction material segment (15) being divided by radial grooves (16) from the connecting grooves (24, 26) in adjacent friction material segments (15), **characterised in that** the connecting grooves (20, 22) in each friction material segment (15) are radially staggered from said connecting grooves (24,26) in the adjacent friction material segments (15).

2. A friction plate according to claim 1 wherein the connecting grooves (20, 22, 24, 26) are circumferential grooves concentric with the friction plate (10).

3. A friction plate according to claim 1 or 2 wherein there are two connecting grooves (20, 22 or 24, 26) in each friction material segment (15).

## Patentansprüche

1. Reibscheibe (10), umfassend ein Reibmaterial (14), das auf einer Trägerplatte (12) gesichert und in dessen Oberfläche mit Nuten (16, 20, 22, 24, 26) ausgebildet ist, worin die Nuten mehrere radiale Nuten (16), die vom Innenrand in Richtung zum Außenrand des Reibmaterials (14) geneigt sind und das Reibmaterial (10) in Reibmaterialsegmente (15) unterteilen, und Verbindungsnuten (20, 22, 24, 26) enthalten, die sich durch jedes der Reibmaterialsegmente (15) erstrecken, um benachbarte radiale Nuten (16) miteinander zu verbinden, wobei die Verbindungsnuten (20, 22) in einem Reibmaterialsegment (15) durch radiale Nuten (16) von den Verbindungsnuten (24, 26) in benachbarten Reibmaterialsegmenten (15) unterteilt werden, **dadurch gekennzeichnet, daß** die Verbindungsnuten (20, 22) in jedem Reibmaterialsegment (15) radial von den Verbindungsnuten (24, 26) in den benachbarten Reibmaterialsegmenten (15) versetzt sind.

2. Reibscheibe nach Anspruch 1, worin die Verbindungsnuten (20, 22, 24, 26) zu der Reibscheibe (10) konzentrische umlaufende Nuten sind.

3. Reibscheibe nach Anspruch 1 oder 2, worin zwei Verbindungsnuten (20, 22 oder 24, 26) in jedem Reibmaterialsegment (15) vorhanden sind.

## Revendications

1. Plaque de friction (10) comprenant un matériau de friction (14) fixé sur une plaque d'âme (12) et présentant des rainures (16, 20, 22, 24, 26) dans la surface dudit matériau, dans laquelle lesdites rainures comprennent une pluralité de rainures radiales (16) qui sont inclinées depuis la bordure intérieure vers la bordure extérieure dudit matériau de friction (14) et qui divisent ledit matériau de friction (10) en segments de matériau de friction (15), et des rainures de connexion (20, 22, 24, 26) qui s'étendent à travers chacun desdits segments de matériau de friction (15) pour connecter des rainures radiales adjacentes (16) les unes aux autres, lesdites rainures de connexion (20, 22) dans un segment de matériau de friction (15) étant divisées par des rainures radiales (16) depuis les rainures de connexion (24, 26) dans des segments de matériau de friction adjacents (15), **caractérisée en ce que** les rainures de connexion (20, 22) dans chaque segment de matériau de friction (15) sont disposées radialement de manière décalée en échelons par rapport auxdites rainures de connexion (24, 26) dans les segments de matériau de friction adjacents (15).

2. Plaque de friction selon la revendication 1, dans laquelle les rainures de connexion (20, 22, 24, 26) sont des rainures circonférentielles concentriques à la plaque de friction (10).

3. Plaque de friction selon l'une ou l'autre des revendications 1 et 2, dans laquelle sont prévues deux rainures de connexion (20, 22, ou 24, 26) dans chaque segment de matériau de friction (15).
